# EUROPEAN PATENT APPLICATION

(11) **EP 2 722 777 A2**
(43) Date of publication of application: **23.04.2014**
(21) Application number: 13187377.0
(22) Date of filing: 04.10.2013
(51) Int. Cl.: G06F 17/30

(54) **Method and apparatus for managing a catalog of media content**

(30) Priority: 16.10.2012 US 201213653261
(71) Applicant: Sony Corporation, Tokyo 108-0075 (JP)
(72) Inventor: Takaya, Norifumi, San Diego, CA 92127 (US); Asam, Aravind, San Diego, CA 92127 (US)
(74) Representative: Jackson, Jonathan Andrew

(57) **Abstract**

An apparatus and method are provided to create a unified catalog of media content that reflects media content available across a multitude of electronic devices. Each electronic device generates a catalog representative of all media content stored thereon and provides that catalog to a requesting server or other electronic device to be combined with at least one other catalog to form a combined or central catalog that accounts for duplicate entries.

## Description

The present invention relates generally but not exclusively to cataloging media content, and more specifically to managing multiple catalogs of media content.

Electronic devices, and in particular consumer electronic devices, are often capable of interoperating to provide media content to one another to allow a user of those devices to view content stored on one device at a second device, often through a network. With the proliferation of electronic devices incorporating the ability to connect to a network and to output media content stored on other electronic devices, consumers have an increased desire to access and view such media content stored on other devices. Additionally, due to the lower cost of storage space, consumers are storing more and more media content to amass large libraries of content that can be strewn across multiple electronic devices.

Current solutions exist to provide consumers with access to media content stored across various electronic devices, but as the size of the library increases and the number of devices which the library is spread across increases, these solutions suffer inefficiencies and slow navigation times and are not viable on devices without high processing power (such as a PC rather than a mobile device). As such, there is a desire for an efficient form of cataloging libraries to provide a single navigable catalog that represents the content stored at these multiple electronic devices that is quickly and easily navigated by any device.

Several embodiments of the invention advantageously address the needs above as well as other needs by providing a method and apparatus to perform the method comprising a server receiving a first catalog of media content from a first electronic device, the server combining the first catalog with a second catalog, identifying at least one duplicate item of media content cataloged in both the first and the second catalogs, and recording the location of the duplicate item of media content. Thereafter, the server can generate a central catalog of media content reflecting the media content stored in both the first and second catalogs by providing a single catalog entry in the central catalog for each duplicate item of media. The server can then receive a query for the central catalog from a requesting electronic device and responsively provide the central catalog to the requesting electronic device for use thereby.

By another embodiment, an electronic device is configured to couple to at least one other electronic device. The first electronic device is configured to generate a first catalog of content stored at the first electronic device and can provide the first catalog to the other electronic device upon request. The first electronic device is also configured to query for and receive from the other electronic device a second catalog of content representing the content stored at the other electronic device. The first electronic device can then identify duplicate items of content cataloged in both the first and the second catalogs of content and generate a combined catalog of content by providing a single catalog entry in the combined catalog for each duplicate item of content.

So configured, the server and/or the electronic device can provide a consumer with a unified navigable catalog of media content that reflects media content available across a multitude of electronic devices. Among other benefits, the unified catalog allows for quicker navigation and/or creation of the catalog as the creation of the central catalog is spread across multiple devices that first catalog their own content. This is especially useful with portable electronic devices that may lack the processing power to quickly catalog all the content available across the multiple devices. Additionally, repeat items of media content are virtually eliminated in a catalog so as to create a more streamlined consumer experience.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG. 1 is a system incorporating the apparatus to perform a method in accordance with at least one embodiment.
FIG. 2 depicts a method performed by an apparatus as shown in FIG. 1 in accordance with at least one embodiment.
FIG. 3 is a block diagram of media content catalogs in accordance with at least one embodiment.
FIG. 4 is an altered system and apparatus as depicted in FIG. 1 in accordance with another embodiment.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention.

The following description is not to be taken in a limiting sense, but is made merely for the purpose of describing the general principles of exemplary embodiments. The scope of the invention should be determined with reference to the claims.

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

Furthermore, the described features, structures, or characteristics of the invention may be combined in any suitable manner in one or more embodiments. In the following description, numerous specific details are provided, such as examples of programming, software modules, user selections, network transactions, database queries, database structures, hardware modules, hardware circuits, hardware chips, etc., to provide a thorough understanding of embodiments of the invention. One skilled in the relevant art will recognize, however, that the invention can be practiced without one or more of the specific details, or with other methods, components, materials, and so forth. In other instances, well-known structures, materials, or operations are not shown or described in detail to avoid obscuring aspects of the invention.

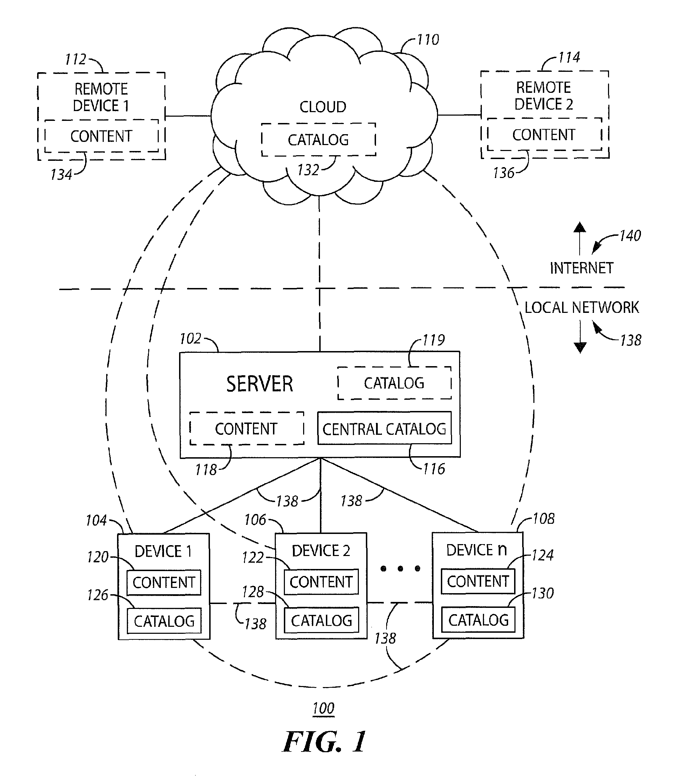

Referring first to FIG. 1, a system 100 incorporating an apparatus 102 to perform a method 200 in accordance with one embodiment is shown. The system 100 includes a server 102 (operating as the apparatus 102 in this embodiment), a first electronic device 104, and a plurality of other electronic devices, including a second electronic device 106 up to an including an nth electronic device 108. Additionally shown is an optional internet-based storage cloud 110 ("cloud") as well as two additional optional remote electronic devices 112, 114. The server 102 includes a central catalog 116 and, by one embodiment, media content 118, and catalog 119 of media content stored at the server 102. Each of the first, second, and nth electronic devices 104, 106, 108 includes media content 120, 122, 124 and a catalog 126, 128, 130 of items of media corresponding to the media content 120, 122, 124 stored at each respective electronic device 104, 106, 108. Optionally, the cloud 110 also includes a catalog 132 of items of media corresponding to media content stored therein. Additionally still, each of the remote electronic devices 112, 114 may also include media content 134, 136.

The media content or items of media may comprise various types of digital files that make up visual and/or audible media (though other sensory media is possible), such as movies, music, pictures, images, audiobooks, video feeds, animated flash, graphics, or any other known types of media content or items of media.

By one approach, the server 102 is a local server and is coupled to each of the electronic devices 104, 106, 108. This coupling may comprise a local network 138, such as an intranet, a Local Area Network (LAN), a Wireless LAN, a Storage Area Network, a System Area Network, a home network, or a Mesh network, though any known local network type may be possible. Further, by other embodiments, the local network 138 may comprise a non-local network such as the internet 140. The local network 138 may implement an Ethernet protocol, a Wi-Fi protocol, a Bluetooth protocol, or any other known wired or wireless communication protocol as are commonly used in local networks. Additionally, by another embodiment, various ones of the first through nth electronic devices 104, 106, 108 may be coupled one to another, directly or indirectly, and may communicate on the local network 138. The inter-coupling of the various electronic devices 104, 106, 108 may be implemented on the local network 138 or via another local network implementing a different or same protocol, all of such local networking being understood in the art. Such a local network 138 may be implemented with a simple internet switch and/or wired or wireless router (not shown), which can simultaneously create the local network 138 as well as offer multiple electronic devices 104, 106, 108 access to the internet 140.

By another approach, the server 102 is also connected to the cloud 110, perhaps through an internet connection 140 (and possibly though a switch or router utilized to create the local network 138), as is commonly understood. Additionally, the remote electronic devices 112, 114 may also be coupled to the cloud 110 through an internet connection 140.

The server 102 may comprise a dedicated server device or simply an electronic device, such as electronic devices 104, 106, 108, that implements a server feature in addition to other electronic device functionality. In such a situation, the server 102 may be an electronic device with ample processing power and storage space to efficiently perform the method 200 as outlined herein, and may be automatically identified or may be specifically selected as the server 102 for the local network 138. The server 102 may operate on an Android® operating system by one embodiment, but other operating systems may be suitable, such as Apple®, Microsoft®, and Linux operating systems. The server 102 communicates with various ones of the electronic devices 104, 106, 108 over the local network 138 to receive and provide data regarding, at least, catalogs 119, 126, 128, 130 of media content included on each respective electronic device 104, 106, 108 or the server 102. Additionally, by another approach, the server 102 can also receive and provide actual media content 118 to and from the various electronic devices 104, 106, 108 or the cloud 110 to be output or stored at the server 102, the electronic devices 104, 106, 108, or the cloud 110. So configured, the server 102 can operate as at least one conduit to transfer data regarding catalogs 119, 126, 128, 130, 132 of media content (and actual media content 118, 120, 122, 124, by one embodiment).

By one embodiment, the server 102 may also store media content 118 that may be or may not be stored at any other electronic device 104, 106, 108 on the local network 138 or the cloud 110. The server 102 may also be configured to create a catalog 119 of the plurality of items of media stored on the server 102. The server 102 may include the ability to view media content 118, 120, 122, 124 directly at the server 102 (i.e., in the instance the server 102 may comprise a PC, a laptop, or any other electronic device having media outputs such as a display and/or audio output, as well as ample processing power and storage space to implement the method 200). Additionally, the server 102 includes a central catalog 116 (i.e., combined catalog), as is described in greater detail herein.

Electronic devices 104, 106, 108 each may comprise a PC, laptop, smart phone, tablet, PDA, television (possibly implementing smart television applications such as Google television or the like), DVD or Bluray player, set-top box, audio receiver, DVR, or any other electronic device capable of outputting or storing media content and interacting with a local network 138. Additionally, by some embodiments, various ones of the electronic devices 104, 106, 108 are capable of communicating over the internet 140, possibly to surf, procure additional media content, or interact with the cloud 110 to store or access media content on the cloud 110.

Electronic devices 104, 106, 108 include media content 120, 122, 124, including a plurality of items of media, stored possibly on hard drives or memory included as part of the electronic devices 104, 106, 108 or accessible by the electronic devices 104, 106, 108. Each electronic device 104, 106, 108 is configured to create a catalog 126, 128, 130 of the plurality of items of media stored thereat. By some embodiments, if an electronic device, such as the first electronic device 104, is configured and authorized to store or access media content on the cloud 110, the electronic device 104 may indicate the identification of at least one item of media that is stored at the electronic device 104 that is also stored at the cloud 110. The identifications may be stored as part of or in addition to the catalog 126 of media content 120 at the electronic device 104, and may be used to help avoid multiple entries of the same items of media into a central catalog 116. These identified items of media may have been stored on the cloud 110 by the electronic device 104 or may represent a local copy downloaded to the electronic device from the cloud 110.

The internet-based storage cloud 110 ("cloud") is an online repository of data (media content or items of media in this context) that is accessible generally through the internet 140 by various or multiple electronic devices, including electronic devices 104, 106, 108 and possibly remote electronic devices 112, 114, as is commonly understood in the art. The cloud 110 may also include certain aspects of cloud computing or other services provided over the internet 140, but the primary purpose in this context involves data storage as a service. Such storage service may be free services or fee-based service. Electronic devices 104, 106, 108 or remote electronic devices 112, 114 with authority to access the cloud 110 can store data such as media content and items of media to the cloud 110 as backup storage to their local storage, or as a primary storage without maintaining a local copy. Additionally, electronic devices with proper authority can download the media content stored at the cloud 110 to their local storage. By one embodiment, the cloud 110 also includes a catalog 132 of media content or items of media stored there that are accessible at least to the electronic devices 104, 106, 108.

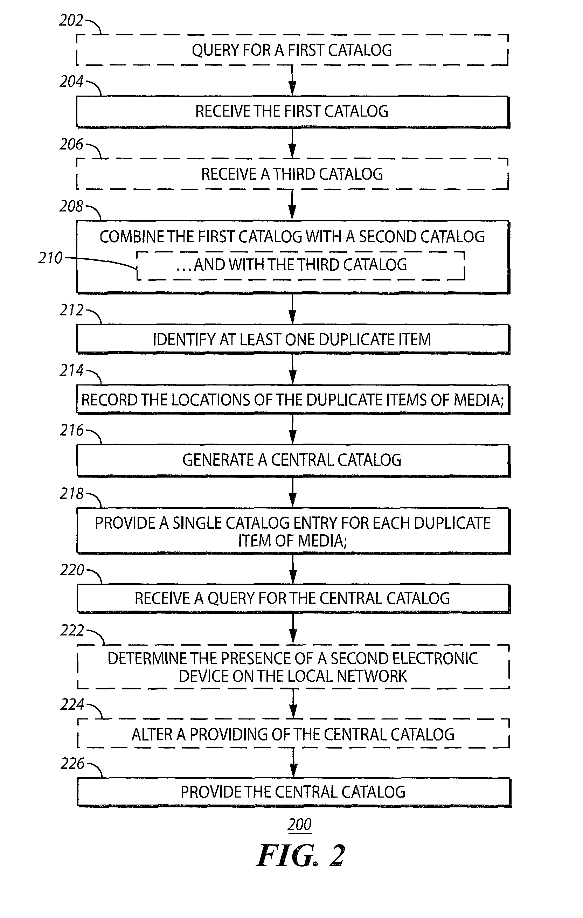

Turning now to FIG. 2, a method 200 performed by the apparatus in the system depicted in FIG. 1 is illustrated in accordance with various embodiments. Optionally, by one embodiment, the server 102 (i.e., local server) queries 202 the first electronic device 104 via the local network 138 for a first catalog 126 of the plurality of items of media stored at the first electronic device 104. The first electronic device 104 may then send the catalog 126 via the local network 138, whereupon the server 102 receives 204 the first catalog 126. The first electronic device 104 may also send rich metadata along with the first catalog 126 or as part of the first catalog 126 that may be stored at the server 102 for access by various electronic devices 104, 106, 108 during navigation of a central catalog 116. Such rich metadata may comprise information about the items of media (such as dates, names, people involved, artist, albums, movie information, links, etc.) or thumbnails of the items of media (such as small low resolution versions of pictures, movie or song samples, or the like).

Upon receiving 204 the first catalog 126, the server 102 may combine 208 the first catalog 126 with a second catalog of a plurality of items of media stored on at least a second electronic device. It is noted that by one embodiment, this second electronic device may be the second electronic device 106 of FIG. 1 and the second catalog may be the catalog 128 of items of media stored on the second electronic device 106 of FIG. 1, catalog 128 having been created by the second electronic device 106 of FIG. 1. Alternatively, the second electronic device may be the server 102 itself and the second catalog may be the catalog 119 of items of media stored on the server 102. Additionally, and by another embodiment, this second device may actually comprise a plurality of electronic devices possibly including any of the server 102 and the second to nth electronic devices 106, 108 of FIG. 1. In such an instance, this second catalog comprises a plurality of catalogs of items of media, wherein each catalog of the plurality of catalogs correspond to sets of items of media stored at each ones of the plurality of electronic devices (i.e., catalog 128 created by the second electronic device 106, catalog 130 created by the nth electronic device 108, and/or catalog 119 created by the server 102), though reference hereafter is made to the second electronic device 106 and the second catalog 128 for simplicity sake. By most embodiments, this second electronic device or plurality of electronic devices are each configured to communicate on the local network 138, though they are not all required to do so at all times.

In combining 208 the first and second catalogs 126, 128, the server 102 may identify 212 at least one item of media (i.e., item of content) having at least one duplicate copy, where the item and its duplicate are cataloged in both the first and second catalogs 126, 128. If there are more than two catalogs, as described in the embodiment above wherein the second catalog comprises a plurality of catalogs, then the server 102 may identify 212 duplicate items cataloged in at least two catalogs of this collection of catalogs (including the first catalog 126 and the plurality of second catalogs). Upon identifying 212 the duplicate items of media, the server 102 can record 214 the locations of the duplicate items of media. This recording 214 can be incorporated into the creation of a new central catalog 116 (or combined catalog), or can be recorded 214 separately.

The server 102 then generates 216 the central catalog 116 of items of media (i.e., a combined catalog of media content) available at the first and second electronic devices 104, 106. As part of this generation 216, the server 102 will provide 218 a single catalog entry in the central catalog 116 for each item of media having at least one duplicate copy. To provide this single catalog entry, the server 102 may eliminate one or more duplicate catalog entries so that only one catalog entry exists for each item of media that has duplicate copies. Alternatively, the server 102 may create a new catalog entry for each item of media having a duplicate copy.

In an alternate embodiment, the server 102 also receives 206 a third catalog 132 of items of media stored at the cloud 110. As described above, the at least a portion of the items of media cataloged in the third catalog 132 where stored to the cloud 110 by the first and/or second electronic devices 104, 106. In this embodiment, the server 102 then combines the first catalog 126 from the first electronic device 104 with the second catalog 128 from the second electronic device 106 and the third catalog 132 from the cloud 110. In so combining, the server 102 may identify 212 at least one item of media having at least one duplicate copy, wherein the identified item of media and its duplicate(s) are cataloged in at least two of the first 126, second 128, and third catalogs 132 (i.e., there is at least one duplicate).

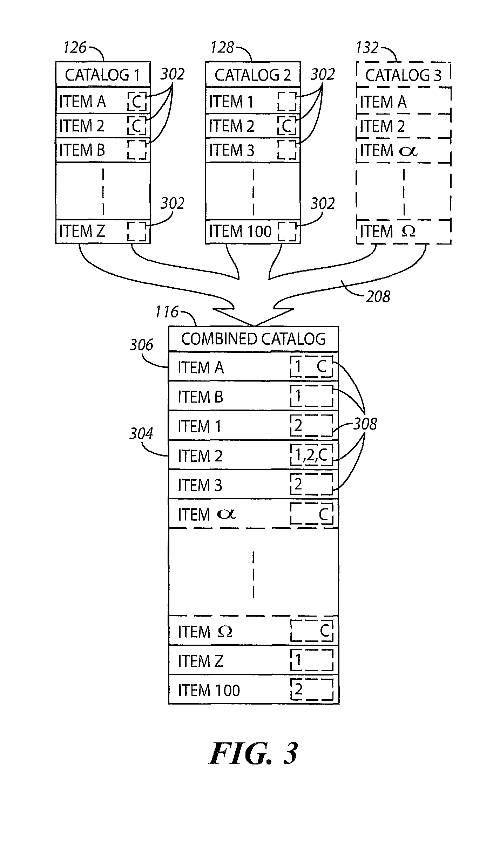

Referring briefly to FIG. 3, a contextual example of media content catalogs is provided. FIG. 3 shows the first catalog 126, the second catalog 128, and the optional third catalog 132. The first catalog 126 includes items of media labeled Item A, Item 2, and Item B through Item Z. The second catalog 128 includes items of media labeled Item 1 through Item 100. The third catalog 132 includes Item A, Item 2, and Item α (alpha) through Item Ω (omega). The third catalog 132 contains items of media not included in first and second catalogs 126, 128 (i.e., Item α (alpha) through Item Ω (omega)), which may have been stored to the cloud 110 by either of remote electronic devices 112 or 114. According to one embodiment described above, the first catalog 126 and second catalog 128 each contain an indicator 302 that identifies whether an item of media exists on the cloud 110 as well (as is shown by the "C" in the indicator 302 for the items of media labeled Item A, and Item 2, both of which are also stored at the cloud 110). This indicator 302 is not present on the optional third catalog 132, however, as the third catalog 132 is the catalog of items stored on the cloud 110.

The catalogs 126, 128, 132 are then combined 208 to the central catalog 116 (i.e., combined catalog) listing all the items of media or media content available at the first and second electronic devices 104, 106 and the cloud 110. As is shown, despite Item 2 being listed separately in both the first catalog 126 and the second catalog 128 (as well as the third catalog 132), only a single catalog entry 304 is created for Item 2 in the central catalog 116. Additionally, despite Item A being listed separately in both catalog 1 and 3, only a single catalog entry 306 is created for Item A in the central catalog 116. Additionally, the central catalog 116 also contains a recordation 308 of the location of each item of media, including the locations of the items of media having duplicate copies (such as the single entry for Item A 306 and Item 2 304).

Returning now to the method 200 of FIG. 2, the server 102 can then receive 220 a query for at least a portion of the central catalog 116 of items of media from an electronic device, such as the first electronic device 104 by one embodiment. The first electronic device 104 could request the entire central catalog 116 from the server 102 or simply portions of the central catalog 116 as a consumer navigates through various portions of the central catalog 116 on the first electronic device 104. The server 102 can then responsively provide 226 the requested portion or entirety of the central catalog 116 to the first electronic device 104 (or any other requesting electronic device). Alternatively, the server 102 can push the central catalog 116 to various electronic devices 104, 106, 108 at regular or irregular intervals, when the central catalog 116 is completed, when an electronic device joins or leaves the local network 138, when the cloud 110 is updated, or whenever the server 102 deems it necessary.

By another embodiment, the server 102 determines 222 whether various ones of the electronic devices, such as the second electronic device 106, are present on the local network 138. This can be achieved using, by one example, XMPP to detect the presence of the other electronic devices 106, 108, though other possibilities exist. Upon determining 222 that, for example, the second electronic device 106 is not present on the local network 138, the server 102 can alter 224 the providing of the central catalog 116 to the first electronic device 104. For example, the server 102 can alter 224 the providing so as to exclude items of media cataloged in the central catalog 116 as being stored only at the second electronic device 106. The server 102 can also provide at least a notification of which items of media cataloged in the central are not currently available (i.e., the items cataloged as being stored only at the second electronic device 106).

So configured, a server 102 can provide an efficient method to create a central combined catalog 116 of items of media or media content available from a plurality of electronic devices 102, 104, 106, 108 and possibly a cloud 110. This allows for consolidation of individual catalogs of items of media available from the plurality of electronic devices 102, 104, 106, 108 to allow for quicker and more accurate content searching, sorting, and filtering.

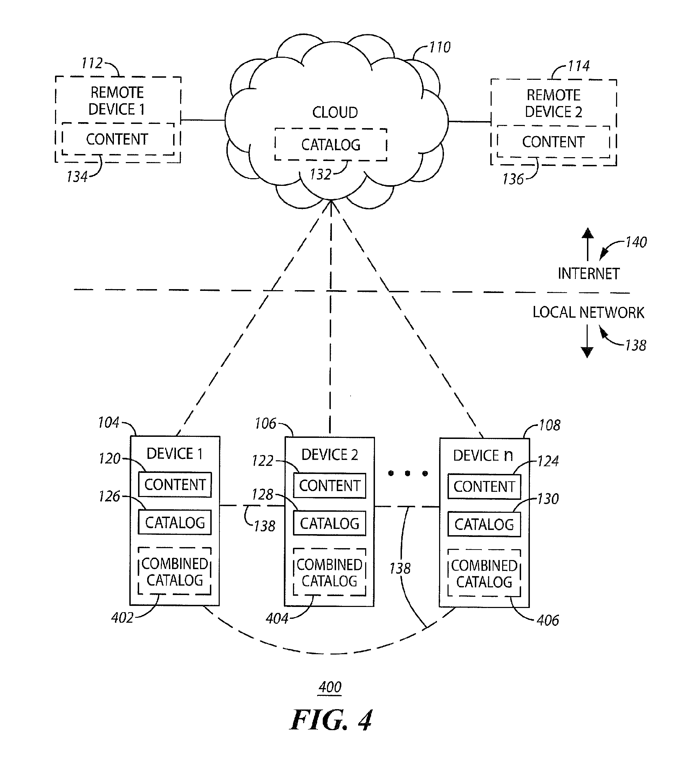

Reference is now made to FIG. 4, illustrating an alternative embodiment 400 of the apparatus and system illustrated in FIG. 1. In this alternative embodiment, a server 102 may not be provided or selected. Instead, each electronic device 104, 106, 108 operates as the apparatus and must perform at least a portion of the operations of the server 102 in the previous embodiment. Much like the previous embodiment, each electronic device, such as the first electronic device 104, is configured to communicate on the local network 138 and couple to at least one other electronic device, such as the second electronic device 106, via the local network 138. Additionally, much like before, each electronic device is configured to generate a catalog of content stored at the electronic device (i.e., the first electronic device 104 generates the first catalog 126 of content 120 stored thereat, and so forth).

However, various electronic devices are also configured to receive from at least one other electronic device a query for at least a portion of their respective catalog and to provide the requested portion of the catalog to the requesting electronic device. For example, the first electronic device 104 is configured to receive from the second electronic device 106 a query for at least a portion of the first catalog 126, wherein the first electronic device 104 is also configured to provide the requested portion of the first catalog 126 to the second electronic device 106.

Conversely, the first electronic device 104 (and various other electronic devices) is configured to query the other electronic device (i.e., the second electronic device 106) for at least a portion of the second catalog 128 and responsively receive the portion of the second catalog 128 from the other electronic device 106.

Additionally, the first electronic device 104 is also configured to identify at least one item of content having at least one duplicate, wherein the at least one item and the at least one duplicate are cataloged in at least two of the first and second catalogs 126, 128. Additionally, the first electronic device 104 is configured to generate a combined catalog 402 of content stored at the first and second electronic devices 104, 106. This is done by the first electronic device 104 providing a single catalog entry in the combined catalog 402 of content for each item of content having at least one duplicate copy. Similarly, each of the second through nth electronic devices 106, 108 may also be configured to generate combined catalogs 404, 406 for use by each electronic device 106, 108 respectively.

As before, by one embodiment, the electronic devices 104, 106, 108 are also configured to store at least a portion of the content stored thereon 120, 122, 124 at the cloud 110 and to identify in its respective catalog 126, 128, 130 the portion of the content 120, 122, 124 also stored at the cloud 110.

Along those lines, by another embodiment, the first electronic device 104 may also be configured to receive a third catalog 132 of content from the cloud 110, wherein at least a portion of the content stored on the cloud 110 was from one of the electronic devices 104, 106, 108. The first electronic device 104 can then identify at least one item of content having at least one duplicate, where the identified item and its duplicated are cataloged as being stored in at least two of the first electronic device 104, the other electronic device 106, and the cloud 110. In response, the first electronic device 104 can generate the combined catalog 402 of content stored at the first electronic device 104, the other electronic device 106, and the cloud 110 by providing a single catalog entry in the combined catalog 402 for each duplicate item of content. Each electronic device 106 and 108 may be capable of performing these operations to generate their own combined catalogs 404, 406.

By another embodiment, the first electronic device 104 is configured to determine whether the other electronic device 106 is present on the local network 138. If not, the first electronic device 104 may alter its combined catalog 402 to exclude items of media cataloged as being stored only at the other electronic device 106.

As configured, in this alternative embodiment of FIG. 4, the system can still function to allow electronic devices 104, 106, 108 to quickly access content on other electronic devices across the local network 138 by allowing electronic devices 104, 106, 108 to query each other on demand to receive each others' catalogs 126, 128, 130 of content. Upon receiving the other catalogs 126, 128, 130, each device 104, 106, 108 can search across, sort, or filter the multiple catalogs to provide to the consumer a single local navigable combined catalog 402 of content available across the multiple electronic devices 104, 106, 108.

The multiple embodiments described herein also can allow for content queuing or playing by a single electronic device (such as the first electronic device 104) of media content available across a plurality of electronic devices 104, 106, 108. Additionally still, the apparatus as configured allows for media content to be thrown from one electronic device to another for output. For example, a consumer using the first electronic device 104, a tablet in this example, selects an item of content available on the tablet 104 and elects to have the item of content played on their TV (i.e., a second electronic device 106). The consumer can then easily select the item from the central catalog 116 or local combined catalog 402 and "throw" it to the TV 106. In another example, the consumer using the tablet 104 could select an item of media available at yet another electronic device (i.e., the nth electronic device 108, possibly comprising a PC, the server 102, or a phone) or the cloud 110 and elect to have it thrown to the TV 106 for output.

While the invention herein disclosed has been described by means of specific embodiments, examples and applications thereof, numerous modifications and variations could be made thereto by those skilled in the art without departing from the scope of the invention set forth in the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Further particular and preferred aspects of the invention are set out in the accompanying independent and dependent clauses. Features of the dependent clauses may be combined with those of the independent clauses and independent claims as appropriate and in combinations other than those explicitly set out in the clauses and claims.

### CLAUSES

1. An apparatus comprising:
   an electronic device configured to:
      communicate on a local network;
      couple to at least one other electronic device via the local network;
      generate a first catalog of content stored at the electronic device;
      receive from the at least one other electronic device via the local network a query for at least a portion of the first catalog of content;
      provide to the at least one other electronic device via the local network the at least a portion of the first catalog of content to the at least one other electronic device in response to receiving the query for the at least a portion of the first catalog of content;
      query to the at least one other electronic device via the local network for at least a second catalog of content representing items of media stored at the at least one other electronic device, the at least a second catalog having been created by the at least one other electronic device;
      receive from the at least one other electronic device via the local network the at least a second catalog of content;
      identify at least one item of content having at least one duplicate, wherein the at least one item of content and the at least one duplicate are cataloged in at least two of the first catalog of content and the at least a second catalog of content; and
      generate a combined catalog of content stored at the first electronic device and content stored at the at least one other electronic device by providing a single catalog entry in the combined catalog of content for each of various ones of items of content having at least one duplicate copy.
2. The apparatus of clause 1 wherein the electronic device is further configured to:
   store at least a portion of the content stored at the electronic device to an internet-based storage cloud; and
   identify in the first catalog the at least a portion of the content stored at the internet-based storage cloud.
3. The apparatus of clause 1 wherein the electronic device is further configured to:
   receive a third catalog of content from an internet-based storage cloud, wherein at least a portion of the content in the third catalog was stored the to the internet-based storage cloud by at least one of the electronic device and the at least one other electronic device;
   identify at least one item of content having at least one duplicate, wherein the at least one item of content and the at least one duplicate are cataloged in at least two of the first catalog of content and the received at least a second catalog of content and the third catalog of content; and
   generate the combined catalog of content by generating a combined catalog of content stored at the first electronic device, content stored the at least one other electronic device, and content stored at the internet-based storage cloud by providing a single catalog entry in the combined catalog of content for each of various ones of items of content having at least one duplicate copy.
4. The apparatus of clause 1 wherein the electronic device is further configured to:
   determine whether the at least one other electronic device is present on the local network; and
   alter the combined catalog of content so as to exclude items of media cataloged as being stored only at the at least one other electronic device in response to determining the at least one other electronic device is not present on the local network.

## Claims

1. A method comprising:
receiving at a server a first catalog from a first electronic device via a local network, wherein the first catalog comprises a catalog of a plurality of items of media stored at the first electronic device, the first catalog having been created by the first electronic device;
combining by the server the first catalog from the first electronic device with at least a second catalog comprising at least one catalog of a plurality of items of media stored on at least a second electronic device configured to communicate on the local network, the at least a second catalog having been created by the at least a second electronic device, wherein combining the first catalog and the at least a second catalog further comprises identifying at least one item of media having at least one duplicate copy, the at least one item of media and the at least one duplicate copy cataloged in at least two of the first catalog and the at least a second catalog;
recording by the server the locations of the at least one item of media having at least one duplicate copy;
generating by the server a central catalog of items of media available at the first electronic device and the at least a second electronic device, wherein generating the central catalog further comprises providing a single catalog entry in the central catalog for each of various ones of the items of media having at least one duplicate copy;
receiving at the server a query for at least a portion of the central catalog of items of media from the first electronic device; and
providing the at least a portion of the central catalog of items of media to the first electronic device in response to receiving the query for the at least a portion of the central catalog.

2. The method of claim 1 further comprising querying the first electronic device by the server via the local network for the first catalog from the first electronic device.

3. The method of claim 1 wherein the first catalog further comprises an identification of at least one item of media stored at the first electronic device that is also stored at an internet-based storage cloud.

4. The method of claim 1 further comprising:
receiving a third catalog of items of media stored at an internet-based storage cloud, wherein at least a portion of the items of media cataloged in the third catalog where stored to the internet-based storage cloud by at least one of the first electronic device and the at least a second electronic device;
wherein combining by the server the first catalog with the at least a second catalog further comprises combining by the server the first catalog with the at least a second catalog and the third catalog, the combining further comprising identifying at least one item of media having at least one duplicate copy, the at least one item of media and the at least one duplicate copy cataloged in at least two of the first catalog, the at least a second catalog, and the third catalog.

5. The method of claim 1 wherein at least one of the at least a second catalog further comprises a catalog of items of media stored on the server, and wherein at least one of the at least a second electronic device comprises the server.

6. The method of claim 1 wherein the at least a second electronic device comprises a plurality of electronic devices, each electronic device of the plurality of electronic devices configured to communicate on the local network, and wherein the at least a second catalog of items of media comprises a plurality of catalogs of items of media, individual catalogs of the plurality of catalogs corresponding to sets of items of media stored at individual ones of the plurality of electronic devices, and individual ones of the catalogs of the plurality of catalogs having been created by corresponding individual ones of the plurality of electronic devices.

7. The method of claim 1 further comprising:
determining by the server whether the at least a second electronic device is present on the local network; and
altering the providing of the central catalog of items of media to the first electronic device so as to exclude items of media cataloged as being stored only at the at least a second electronic device in response to determining the at least a second electronic device is not present on the local network.

8. An apparatus comprising:
a server coupled to a first electronic device through a local network, the server configured to:
receive a first catalog from the first electronic device via the local network, wherein the first catalog comprises a catalog of a plurality of items of media stored at the first electronic device, the first catalog having been created by the first electronic device;
combine the first catalog from the first electronic device with at least a second catalog comprising at least one catalog of a plurality of items of media stored on at least a second electronic device configured to communicate on the local network, the at least a second catalog having been created by the at least a second electronic device, wherein combining the first catalog and the at least a second catalog further comprises identifying at least one item of media having at least one duplicate copy, the at least one item of media and the at least one duplicate copy cataloged in at least two of the first catalog and the at least a second catalog;
record the locations of the at least one item of media having at least one duplicate copy;
generate a central catalog of items of media available at the first electronic device and the at least a second electronic device by providing a single catalog entry in the central catalog for each of various ones of the items of media having at least one duplicate copy;
receive a query for at least a portion of the central catalog of items of media from the first electronic device; and
provide the at least a portion of the central catalog of items of media to the first electronic device in response to receiving the query for the at least a portion of the central catalog.

9. The apparatus of claim 8 wherein the server is further configured to query the first electronic device via the local network for the first catalog from the first electronic device.

10. The apparatus of claim 8 wherein the first catalog further comprises an identification of at least one item of media stored at the first electronic device that is also stored at an internet-based storage cloud.

11. The apparatus of claim 8 wherein the server is further configured to:
receive a third catalog of items of media from an internet-based storage cloud, wherein at least a portion of the items of media in the third catalog where stored the to the internet-based storage cloud by at least one of the first electronic device and the at least a second electronic device;
combine the first catalog with the at least a second catalog by combining the first catalog with the at least a second catalog and the third catalog, the combining further comprising identifying at least one item of media having at least one duplicate copy, the at least one item of media and the at least one duplicate copy cataloged in at least two of the first catalog, the at least a second catalog, and the third catalog.

12. The apparatus of claim 8 wherein at least one catalog of the at least a second catalog further comprises a catalog of items of media stored on the server, and wherein at least one of the at least a second electronic device comprises the server.

13. The apparatus of claim 8 wherein the server is further configured to:
combine the first catalog with at least a second catalog comprising at least one catalog of a plurality of items of media stored on at least a second electronic device, wherein the at least a second electronic device comprises a plurality of electronic devices, each electronic device of the plurality of electronic devices configured to communicate on the local network, and wherein the at least a second catalog of items of media comprises a plurality of catalogs of items of media, individual catalogs of the plurality of catalogs corresponding to sets of items of media stored at individual ones of the plurality of electronic devices, and individual ones of the catalogs of the plurality of catalogs having been created by corresponding individual ones of the plurality of electronic devices.

14. The apparatus of claim 8 wherein the server is further configured to:
determine whether the at least a second electronic device is present on the local network; and
alter the providing of the central catalog of items of media to the first electronic device so as to exclude items of media cataloged as being stored only at the at least a second electronic device in response to determining the at least a second electronic device is not present on the local network.

15. An apparatus comprising:
an electronic device configured to:
communicate on a local network;
couple to at least one other electronic device via the local network;
generate a first catalog of content stored at the electronic device;
receive from the at least one other electronic device via the local network a query for at least a portion of the first catalog of content;
provide to the at least one other electronic device via the local network the at least a portion of the first catalog of content to the at least one other electronic device in response to receiving the query for the at least a portion of the first catalog of content;
query to the at least one other electronic device via the local network for at least a second catalog of content representing items of media stored at the at least one other electronic device, the at least a second catalog having been created by the at least one other electronic device;
receive from the at least one other electronic device via the local network the at least a second catalog of content;
identify at least one item of content having at least one duplicate, wherein the at least one item of content and the at least one duplicate are cataloged in at least two of the first catalog of content and the at least a second catalog of content; and
generate a combined catalog of content stored at the first electronic device and content stored at the at least one other electronic device by providing a single catalog entry in the combined catalog of content for each of various ones of items of content having at least one duplicate copy.
